# EUROPÄISCHE PATENTANMELDUNG

(11) **EP 2 735 930 A2**
(43) Veröffentlichungstag der Anmeldung: **28.05.2014**
(21) Anmeldenummer: 13005259.0
(22) Anmeldetag: 08.11.2013
(51) Int. Cl.: G05B 19/4097

(54) **Verfahren und Vorrichtung für die Fixmaßherstellung**

(30) Priorität: 22.11.2012 DE 102012022781
(71) Anmelder: Weniger, Heinz, 33613 Bielefeld (DE)
(72) Erfinder: Weniger, Heinz, 33613 Bielefeld (DE)

(57) **Zusammenfassung**

Die Erfindung hat die Aufgabe, mit einer besonderen Software (001) Schnittpläne (45) für die Herstellung von Fixmaßen (20) aus Platten (30) herzustellen und zu dokumentieren mit der Vorgabe, durch Blocknachschnitte (14), Teilblocknachschnitte (13) Figur 3, Schnittplanketten (43) Figur 2 besonders geringe Plattenverluste und durch den Einsatz von Stapelrobotern (24) für die Bildung der Fixmaßstapel (27) auf Stapelrosten (7) Figur 3 hohe Produktionsleistungen mit vollautomatischen Abläufen zu erzielen.

Mit der Erfindung sollen die seit der Industrialisierung der Holzindustrie heute noch bestehenden Produktionsmethoden für die Herstellung der Fixmaße (20) aus Platten (30) Figur 3 und den damit seither bei Rohstoffen und Energie stattfindenden hohen Vernichtungen, durch eine neue, moderne und zeitgemäße Produktionstechnologie mit ressourcenschonenden Eigenschaften ausgeschlossen werden.

## Beschreibung

-Stand der Technik- Die Erfindung betrifft produktionstechnische Vorrichtungen verbunden mit Softwareverfahren, die aus großformatig hergestellten, plattenförmigen Werkstoffen aus Holz, Stahl, Kunststoff, Glas und anderen flächigen Werkstoffen wie Stoffen, Papieren, Pappen o. dgl., für die Produktion beliebiger Gebrauchs- und Anwendungsgegenstände aus den jeweiligen Werkstoffen nach Schnittplänen, Schnittmustern u. ä., von Rechnern mittels einer Software auf der Basis bestimmter Algorithmen für die jeweiligen Werkstoffe dokumentiert und hergestellt, wonach dann die passenden verschiedenen Kleinformate mit einer Produktionsanlage hergestellt werden.

Die bekannten Schnittpläne, Schnittmuster u. ä., für das Herstellen der Kleinformate aus Großformaten werden zwar auch bereits teilweise mit Rechnerprogrämmen hergestellt, die jedoch den großen Nachteil haben, dass sie nur Aufteilpläne, Schnittmustern u. ä., herstellen können, die der Konstruktion und dem Alter der jeweiligen Produktionsanlage entsprechen, mit denen es jedoch nicht möglich ist, rechnerisch mögliche Variationen von Kleinformaten in die Schnittpläne, Schnittmuster u. ä. zur optimalen Nutzung der Großformate einzubringen. Dadurch entstehen hohe Materialverluste und auch Energieverluste durch konstruktionsbedingt weit unter den Möglichkeiten liegenden Nutzung der installierten Antriebsenergien bei den Produktionsanlagen.
Es entstehen so hohe Kosten bei Rohstoffen, Energie, Personal, ja sogar Zwänge zur Entsorgung erstklassiger Ware, die bedingt durch mangelhafte Software- und Produktionstechnologien als Überproduktion entstehen, um den tatsächlichen Bedarf für die Serienfertigungen zu erhalten. Das bedeutet weitere zusätzlichen hohe Kosten und nicht zuletzt die Vernichtung wichtiger Ressourcen.

-Aufgabenstellung- Die Erfindung hat die Aufgabe, diese kostspieligen Mängel zu beseitigen, indem ungeachtet der bestehenden Produktionsmaschinen mittels einer neuen Software auf der Basis bestimmter Algorithmen Schnittpläne, Schnittmuster u. ä. mit dem ausschließlichen Ziel einer optimalen und unverbesserbaren Materialnutzung hergestellt werden, für die dann neue, moderne Produktionsmaschinen entwickelt werden, mit ebenfalls dem ausschließlichen Ziel ihrer optimalen und unverbesserbaren Nutzung von Energie- und Produktionsraum bei der Herstellung der verschiedenen Kleinformate aus Großformaten.

-Lösung- Als beispielgebend für die Darstellung der Lösung dieser Aufgabe wurde die Herstellung von Kleinformaten aus Großformatplatten in der Holzindustrie gewählt. Wobei hier besonderes die Entwicklung einer neuen Software in den Vordergrund gestellt ist, die auf der Basis einer nachfolgend näher beschriebenen Nachschnitt-Technik eine hohe Ressourceneffizienz bei Rohstoffen, Energie und Investitionsnutzung erzeugt und durch ihre Effizienz gleichzeitig die Entwicklung neuer Produktionstechniken herausfordert.
Mit dieser Symbiose soll die heute für diesen Produktbereich verwendeten, verschiednen und unabhängig voneinander eingesetzten Produktionssysteme eine homogene Produktionseinheit entstehen, mit der gegenüber der heutigen Herstellung von Kleinformaten aus Großformatplatten neben den zu ihrer Entwicklung führenden kommerziellen, besonders auch humanitäre Absichten verwirklicht werden.
Bei der Herstellung von Kleinformaten aus Großformatplatten werden in der Praxis der Holzindustrie heute weltweit die Kleinformate Fixmaße genannt, die in der nachfolgenden Beschreibung und auf den Zeichnungen eingesetzt ist.

Gelöst wird die Aufgabe durch die in den kennzeichnenden Teilen der Schutzansprüche angegebenen Neuheitsmerkmale und den in der nachfolgenden Beschreibung angegeben Details.

In der nachfolgenden Beschreibung wird die Erfindung dargestellt. Es zeigt:
- Figur 1: Zeichnung Fördern und Stapeln
- Figur 2: Zeichnung Nachschnitte
- Figur 3: Zeichnung Sägen und Stapeln
- Figur 4: Software - Protokoll
- Figur 5: Vergleichstabelle
- Figur 6: Produktionsanlage für Fixmaße

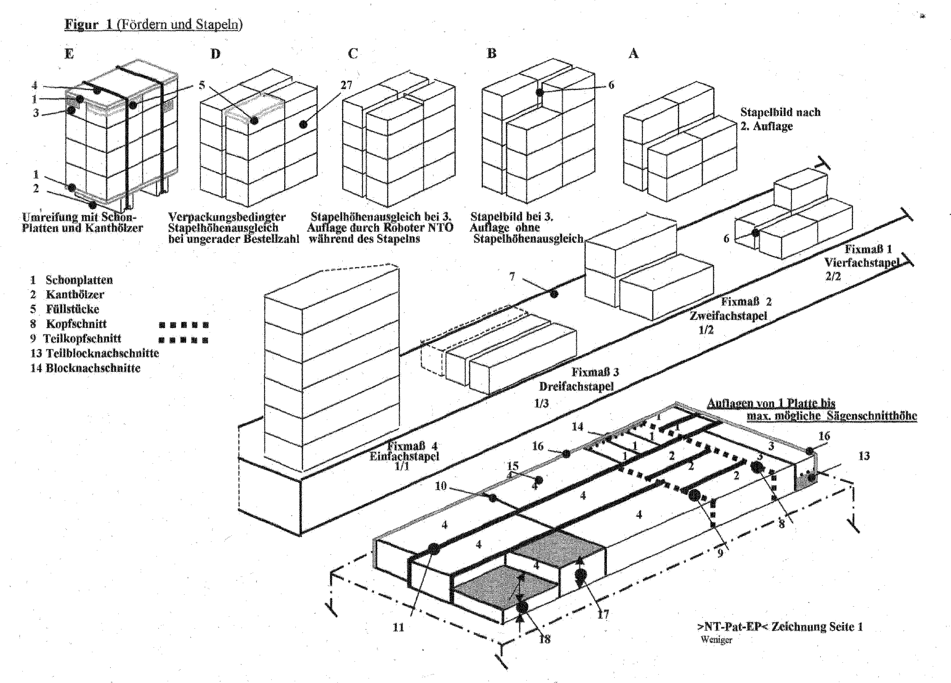

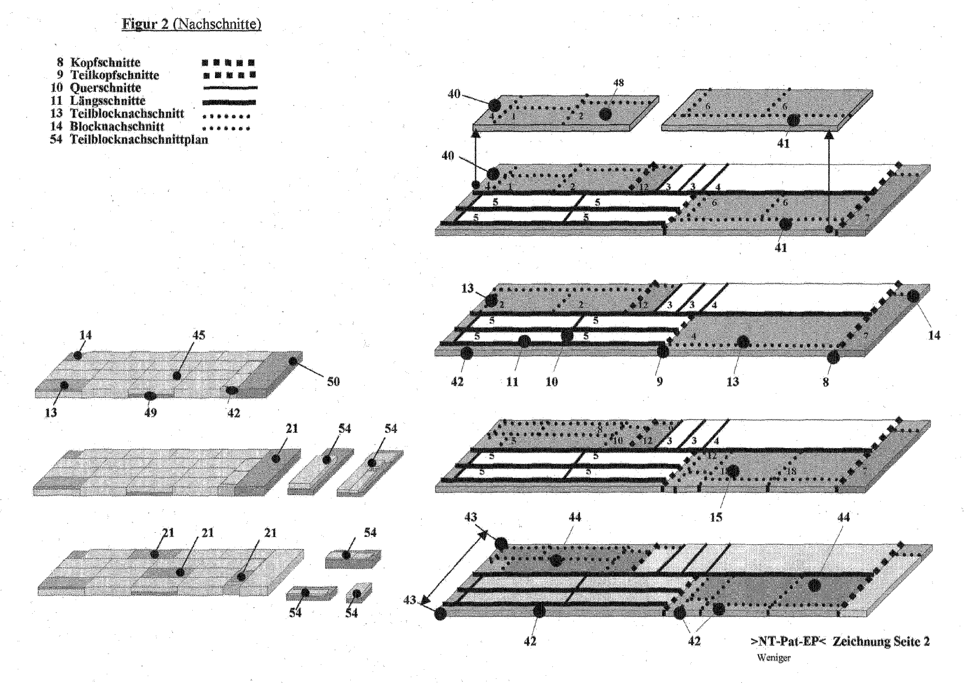

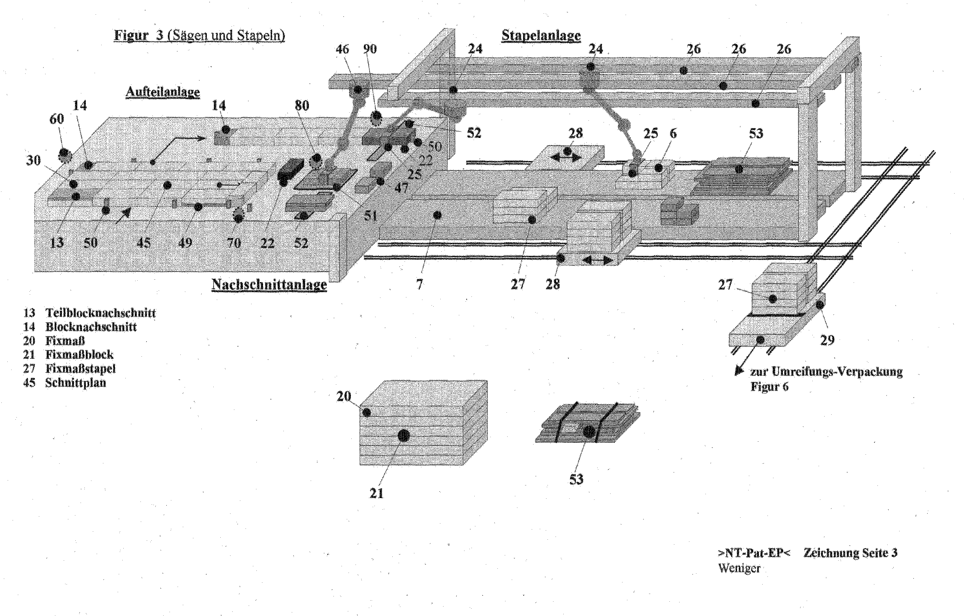

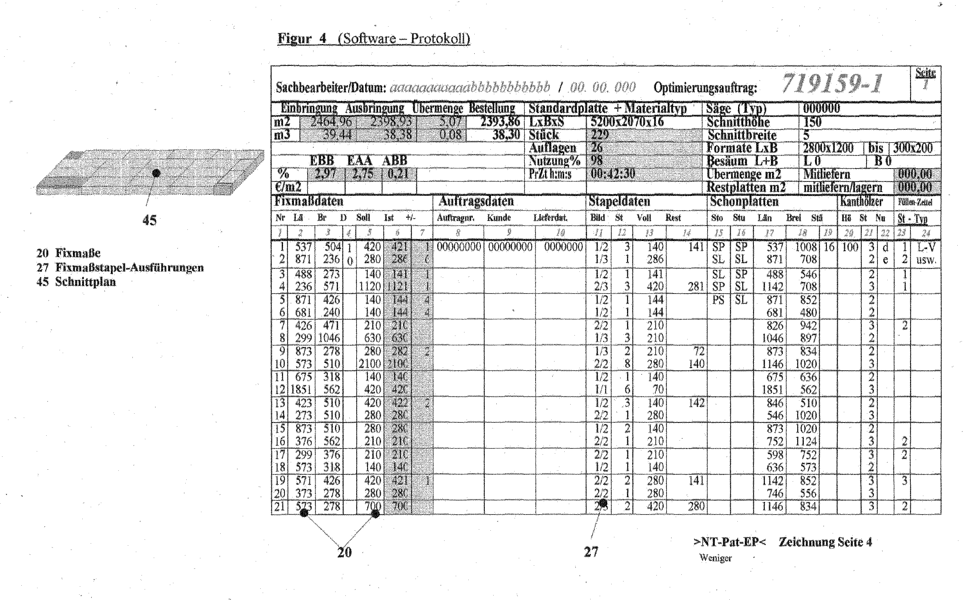

Die Software 001 bestimmt die Ausführung der Figuren 1 bis 6. Es werden zunächst aus den Fixmaßen 20 eines Produktionsauftrages des Beispieles Figur 2 Schnittpläne 45 errechnet und dokumentiert, nach denen in Kooperation der Sägen 60, 70, 80, 90 Figur 3 der Zuschnitt der Fixmaße 20 Figur 4 aus Platten 30 Figur 3 aus vorher gebildeten Vollauflagen 17 oder Teilauflagen 18 Figur 1, jeweils bestehend aus einer oder mehreren übereinander liegenden Platten 30 erfolgt, und die so entstehenden Fixmaßblöcke 21 unmittelbar nach ihrem Zuschnitt von Robotergreifern 25 der Roboter 24 zu ihren von der Software 001 in Verbindung mit der Maschinensteuerung errechneten Position der Stapelbildung 27 auf Stapelrosten 7 Figur 3 gefördert werden, und dabei zu den von der Software 001 in Spalte 11 der Figur 4 vorgegebenen Stapelbildung 27 mit Hilfe von Greiferfreiräumen 6 Figur 3 und 1 gebracht.

Die von der Software 001 errechneten Blocknachschnitte 14, Teilblocknachschnitte 13 Figur 3, werden einzelne Fixmaßblöcke 21 zunächst vom Nachschnittroboter 46 in den Bereich der Nachschnittanlage gefördert und hier von der Nachschnittsäge 80 nach den Vorgaben der Software 001 nachgeschnitten und danach wieder vom Nachschnittroboter 46 zum Sammelplatz 47 gefördert und von hier von den Stapelrobotern 24 wie bereits beschrieben zu ihrem Bestimmungsort auf der Stapelroste 7 Figur 3 gefördert.

Beim Blocknachschnitt 14 wird immer nur eine Abmessung des betreffenden Fixmaßblockes 21 von der Nachschnittsäge 80 verändert. Beim Teilblocknachschnitt 13 werden eine oder beide Abmessungen bei einem oder mehreren Teilblöcken 13 mit einem oder mehreren Fixmaßen 20 des jeweils gleichen, im Greifern 25 befindlichen Fixmaßblockes 21 Figur 3 verändert.

Vorgesehen ist bei Teilblocknachschnitten 13 auch, dass bei einem oder mehreren Teilen des jeweils im Greifer 25 befindlichen Fixmaßblockes 21 aus Schnittplan 45, bestehend aus mehr als einem Fixmaß 20, von der Nachschnittsäge 80 jeweils durch einen oder zwei Nachschnitte zu einem oder mehreren gleichen oder ungleichen Fixmaßen 20 des Produktionsauftrages Spalte fünf Figur 4 nachgeschnitten werden.
Dieser Vorgang gilt auch beim Nachschnitt von Großfixmaß 40 und Teilplatte 41 Figur 2.

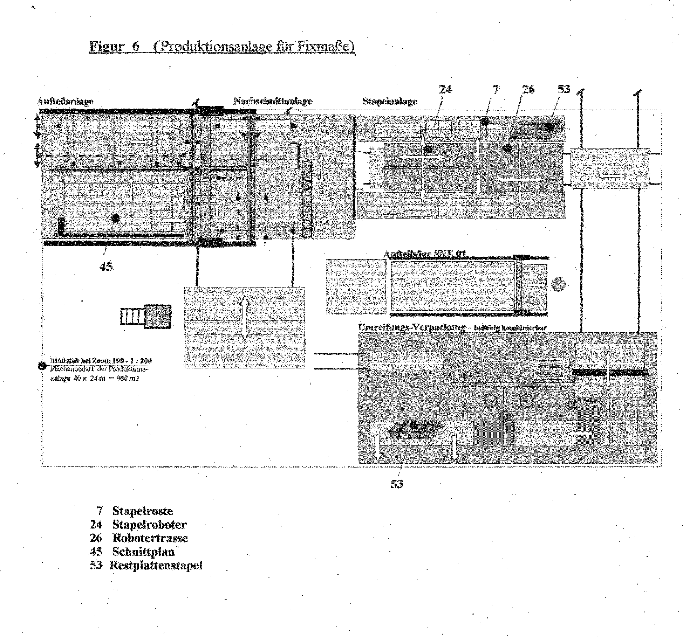

Zur Vermeidung von Übermengen, also mehr als die im Produktionsauftrag der Spalte fünf Figur 4 geforderten jeweiligen Fixmaße 20, ist für den von der Software 001 festgestellten Überhang bei Platten bei einem Produktionsauftrag die Bildung eines Restplattenblockes 50 oder Restplattenteilblockes 49 Figur 2 vorgesehen, der entweder in voller Größe, oder maßmodifiziert bis zum vorgesehenen Maximalformat Zeile vier Figur 4 von einer der Sägen 60, 70, 80, 90 Figur 3 entweder dem Kunden mitgeliefert oder vor Ort zwischengelagert wird, z. B. auch zur Verwendung für Fixmaße 20 eines folgenden Produktionsauftrages der Spalte fünf Figur 4, die dann mit der Aufteilsäge SNE 01 Figur 6 zu von der Software 001 bestimmten Fixmaßen 20 zur Erfüllung der Sollzahlen Spalte fünf Figur 4 zugeschnitten werden oder ohne Zwischenlagerung mittels Teilblocknachschnittplänen 54 Figur 2 sofort zu Fixmaßen 20 aus beliebigen Fixmaßblöcken 21 zugeschnitten werden.

Die Teilstapel eines Stapels 27 Figur 3 müssen aus umreifungstechnischen Gründen gleichhoch sein. Eine von der Software 001 ermittelte Ungleichheit wird stückzahlenmäßig in Spalte dreiundzwanzig Figur 4 dokumentiert. Der Höhenausgleich der Stapel 27 erfolgt durch Füllstücke 5 Figur 1, die von der Aufteilsäge SNE 01 Figur 6 hergestellt und dem Stapel 27 Figur 1 automatisch zugeführt werden.
Fertiggestellte Stapel 27 werden vom Kufenförderer 28 von den Stapelrosten 7 abgenommen, dem Palettierer 29 übergeben, der dann den Stapel 27 Figur 3 zur Umreifung in die Umreifungs-Verpackung Figur 6 fördert, wo er beispielsweise in der Ausführung E Figur 1 für den Transport zum Besteller der Fixmaße 20 mit Schonplatten 1 und Kanthölzern 2 versehen mit Stahl- oder Kunststoffband 4 umreift und mit einem Packzettel 3 versehen wird.

Die Trennung der Fixmaßblöcke 21 für Stapelhöhenausgleich C Figur 1, Teilblocknachschnitt 13, Großfixmaß 40, Teilplatte 41 innerhalb von Schnittplanketten 43 und Schnittplankettenänderungen 44 Figur 2 und Schnittplänen 45 erfolgt im Greifer 25 und beginnt mit der Aufnahme des Fixmaßblockes 21 und kann am im Greifer 25 zurückgebliebenen Teil eines Fixmaßblockes 21 nach dem Ablegen eines ersten Teiles eines Fixmaßblockes 21 Figur 3 beliebig wiederholt werden.

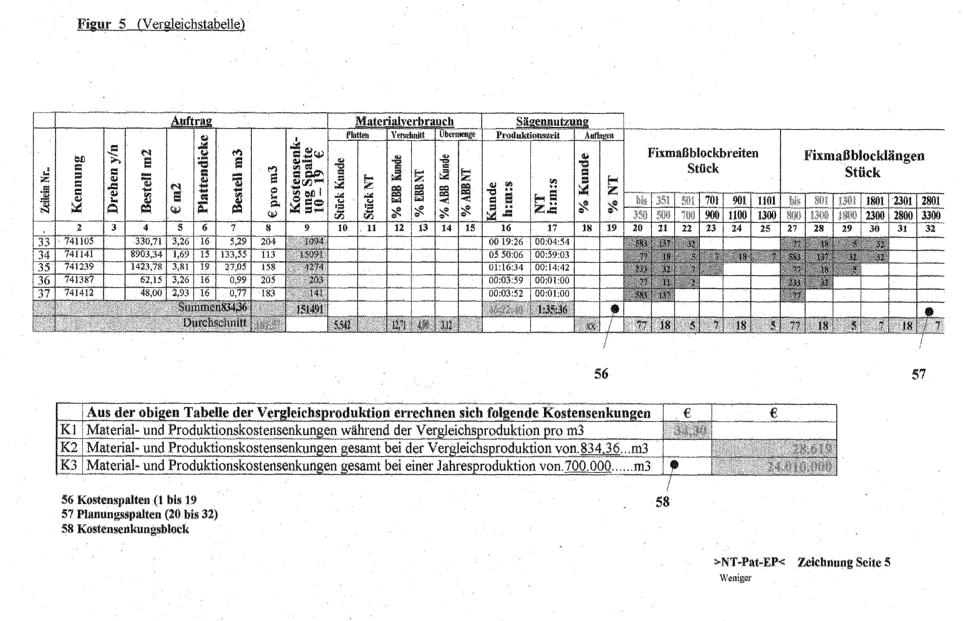

Außerdem ist vorgesehen, dass die Software 001 für die Projektierung von Produktionsanlagen Figur 6 für Fixmaße 20 produktionsparallel mit der Software einer bestehenden Einrichtung für die Herstellung von Fixmaßen 20 einzusetzen ist, wobei die Ergebnisse beider Software verglichen und in den Kostenspalten 56 und im Kostensenkungsblock 58 als Grundlage für kommerzielle Investitionsentscheidungen, und in den Planungsspalten 57 der Vergleichstabelle Figur 5 als technische Grundlage für Entscheidungen maschineller Ausführung einer neuen Produktionsanlage für Fixmaße Figur 6 vorgesehen sind.

Vorgesehen ist, dass Schnittpläne 45 beliebig mit Kopfschnitten 8, Teilkopfschnitten 9, Querschnitten 10 und Längsschnitten 1 Figur 2 ausgestattet werden können, wobei jedes Fixmaß im Schnittplan eine Fixmaßnummer 15 erhält und für den Zuschnitt Vollauflagen 17 und Teilauflagen 18 zu bilden sind, die als Referenzschnitt eine Besäumung 16 Figur 1 erhalten.

## Patentansprüche

1. Vorrichtungen verbunden mit Softwareverfahren für die Herstellung von Kleinformaten aus plattenförmigen Großformatplatten aus Holz, Stahl, Kunststoff, Glas und anderen flächigen Werkstoffen wie Stoffen, Papieren, Pappen o. dgl., mit einer Produktionsanlage mittels von einem Optimierungsrechner hergestellter Schnittpläne, aus einer oder mehreren Kleinformatbestellungen beliebiger Anzahl verschiedener Kleinformate in jeweils beliebiger Stückzahl, die zu einem Produktionsauftrag zusammengesetzt sind, die erforderlichen Schnittpläne errechnet, dokumentiert und der Produktionsanlage die Daten für die Herstellung der Kleinformate aus den plattenförmigen Großformatplatten übermittelt, **dadurch gekennzeichnet, dass** bei der Erfindung die Software (001) entsprechend einem Auftrag nach Beispiel Figur 4 Spalte zwei bis fünf zusammengestellte Fixmaße (20) beliebiger Formate und Stückzahlen zu Schnittplan (45) entsprechend Beispiel Figur 3 auf Basis bestimmter algorithmischer Optimierungsverfahren verarbeitet und die Ergebnisse in den Zeilen und Spalten des Protokolls Figur 4 dokumentiert und davon ausgehend der gesamte Produktionsverlauf wie in den Figuren 1 und 3 dargestellt online gesteuert wird, indem zunächst bei der Errechnung der Schnittpläne (45) unter Berücksichtigung der Fixmaßbestellungen Figur 4 Spalte fünf in sich wiederholenden Formationen als geschlossene Schnittplanketten (43) Figur 2 mit einer oder mehreren Vollauflagen (17) oder Teilauflagen (18) Figur 1, gebildet aus Standardplatten (30) Figur 3, und gleichzeitig für Großfixmaße (40) und/oder Teilplatten (41) Figur 2, unabhängig von der Anzahl Vollauflagen (17) bzw. Teilauflagen (18) Figur 1, der von der Software (001) mit dafür vorgesehenen Verfahren errechneten, geschlossenen Schnittplankette (43), eine oder mehrere von der Software (001) dann mit ergänzenden Verfahren errechneten Schnittplankettenänderungen (44) innerhalb der geschlossenen Schnittplankette (43) Figur 2 ebenfalls unter Berücksichtigung der Fixmaßbestellungen Spalte fünf Figur 4 von der Software (001) Blocknachschnitte 14, Teilblocknachschnitte 13, Kopfschnitte 8, Teilkopfschnitte 9 in beliebiger Anordnung bei den Schnittplänen 45 und Teilblocknachschnittplänen 54 Figur 2 mit weiteren, für die Vorbereitung des Zuschnittes der Fixmaße (20) vorgesehenen Verfahren berechnet und dokumentiert wird, indem die besondere Software (001) mit übergeordnetem Algorithmus aller für die Nachschnitt-Technik angewendeten Verfahren die Schnittvorkommen innerhalb des gesamten Produktionsverlaufes wie in den Figuren 1 und 3 dargestellt, optimiert dokumentiert bzw. protokolliert und den Steuerungseinrichtungen für die Steuerung der einzelnen Produktionsschritte zur Herstellung der Fixmaße 20 Figur 3 mit der Produktionsanlage für Fixmaße Figur 6 online übermittelt.

2. Vorrichtungen verbunden mit Softwareverfahren für die Herstellung von Kleinformaten aus plattenförmigen Großformatplatten aus Holz, Stahl, Kunststoff, Glas und anderen flächigen Werkstoffen wie Stoffen, Papieren, Pappen o. dgl., mit einer Produktionsanlage mittels von einem Optimierungsrechner hergestellter Schnittpläne, aus einer oder mehreren Kleinformatbestellungen beliebiger Anzahl verschiedener Kleinformate in jeweils beliebiger Stückzahl, die zu einem Optimierungsauftrag zusammengesetzt sind, die erforderlichen Schnittpläne errechnet, dokumentiert und der Produktionsanlage die Daten für die Herstellung der Kleinformate aus den plattenförmigen Großformatplatten übermittelt, nach Anspruch 1, **dadurch gekennzeichnet, dass** Die Fixmaßblöcke (21) Figur 3 der jeweiligen von der Software (001) errechneten Schnittpläne 45 Figur 3 bzw. Schnittplanketten (43/44) Figur 2, unmittelbar nach ihrem Zuschnitt vom Robotergreifer (25) übernommen und von den Stapelrobotern (24) zur Stapelbildung (27) auf der Stapelroste (7) gefördert werden, und für den Zuschnitt der Fixmaßblöcke (21) Figur 3, im Großfixmaß (40) bzw. der Teilplatte (41) Figur 2 diese bei gleicher Höhe einer Auflage (17, 18) Figur 1 innerhalb der Nachschnittanlage Figur 3 der von der Software (001) errechneten Blocknachschnitte (14) zu Fixmaßblöcken (21) zugeschnitten und vom Nachschnittroboter (46) auf den Sammelplatz (47) für nachgeschnittene Fixmaßblöcke (21) zum Abtransport mit den Stapelrobotern (24) zur Stapelbildung (27) auf der Stapelroste (7) gefördert werden, und dass für den Zuschnitt der Fixmaßblöcke (21) Figur 3 im Großfixmaß (40) bzw. der Teilplatte (41) Figur 2, diese innerhalb der Robotergreifern (25) getrennt und in der Nachschnittanlage mit Teilblocknachschnitten (13) zu Fixmaßblöcken (21) zugeschnitten und vom Nachschnittroboter (46) entweder auf den Sammelplatz (47) für nachgeschnittene Fixmaßblöcke (21) zum Abtransport mit den Stapelrobotern (24) zur Stapelbildung (27) auf der Stapelroste (7) oder über die Robotertrasse (26) direkt zur Stapelbildung (27) auf die Stapelroste (7) gefördert werden, wobei für das Ablegen der Fixmaße auf die Stapel Greiferfreiräume (6) Figur 3 für die Robotergreifer vorgesehen sind.

3. Vorrichtungen verbunden mit Softwareverfahren für die Herstellung von Kleinformaten aus plattenförmigen Großformatplatten aus Holz, Stahl, Kunststoff, Glas und anderen flächigen Werkstoffen wie Stoffen, Papieren, Pappen o. dgl., mit einer Produktionsanlage mittels von einem Optimierungsrechner hergestellter Schnittpläne, aus einer oder mehreren Kleinformatbestellungen beliebiger Anzahl verschiedener Kleinformate in jeweils beliebiger Stückzahl, die zu einem Optimierungsauftrag zusammengesetzt sind, die erforderlichen Schnittpläne errechnet, dokumentiert und der Produktionsanlage die Daten für die Herstellung der Kleinformate aus den plattenförmigen Großformatplatten übermittelt, nach Anspruch 2, **dadurch gekennzeichnet, dass** parallel zur Herstellung der Schnittpläne für die Vorbereitung der Produktion der Fixmaße (20) wie Beispiel Spalte fünf Figur 4 für die vorhandene Produktionsanlage mit der vorhandenen Software, die Software (001) gleichzeitig die Schnittpläne für die Produktionsanlage für Fixmaße (20) Figur 3 herstellt und daraus mit einer weiteren besonderen Software die Daten der Spalten 9 bis 32 der Figur 5 dokumentiert werden, als kommerzielle Grundlage für Investitionsplanungen und technische Grundlage für die Projektierung einer neuen Produktionsanlage für Fixmaße (20) Figur 6 verwendet werden.

4. Vorrichtungen verbunden mit Softwareverfahren für die Herstellung von Kleinformaten aus plattenförmigen Großformatplatten aus Holz, Stahl, Kunststoff, Glas und anderen flächigen Werkstoffen wie Stoffen, Papieren, Pappen o. dgl., mit einer Produktionsanlage mittels von einem Optimierungsrechner hergestellter Schnittpläne, aus einer oder mehreren Kleinformatbestellungen beliebiger Anzahl verschiedener Kleinformate in jeweils beliebiger Stückzahl, die zu einem Optimierungsauftrag zusammengesetzt sind, die erforderlichen Schnittpläne errechnet, dokumentiert und der Produktionsanlage die Daten für die Herstellung der Kleinformate aus den plattenförmigen Großformatplatten übermittelt, nach Anspruch 3, **dadurch gekennzeichnet, dass** bei der Erfindung die Software (001) eine weitere besondere Aufgabe erfüllt, die bei verschiedenen Fixmaßen (20) Figur 4 zwangsläufig anfallenden Übermengen der Fixmaßbestellungen Figur 4 Spalte fünf auf Basis bestimmter algorithmischer Optimierungsverfahren zu von den Fixmaßen (20) Figur 4 unabhängigen, großformatigen Restplatten (53) kombiniert, die dann nach ihrem dafür innerhalb der Produktionsanlage Figur 6 mit Längssäge (60), Kopfsäge (70), Nachschnittsäge (80) bzw. Quersäge (90) vorgesehenen Zuschnitt, für deren Schnittpositionierung der zuzuschneidenden Fixmaße (20) Schieber/Gegenschieber (50) vorgesehenen sind, dann von den Robotern (24) auf der Stapelroste (7) zu Restplattenstapeln (53) Figur 3 aufgestapelt und im Anschluss daran innerhalb der Umreifungs-Verpackung für den Weitertransport umreift werden.

5. Vorrichtungen verbunden mit Softwareverfahren für die Herstellung von Kleinformaten aus plattenförmigen Großformatplatten aus Holz, Stahl, Kunststoff, Glas und anderen flächigen Werkstoffen wie Stoffen, Papieren, Pappen o. dgl., mit einer Produktionsanlage mittels von einem Optimierungsrechner hergestellter Schnittpläne, aus einer oder mehreren Kleinformatbestellungen beliebiger Anzahl verschiedener Kleinformate in jeweils beliebiger Stückzahl, die zu einem Optimierungsauftrag zusammengesetzt sind, die erforderlichen Schnittpläne errechnet, dokumentiert und der Produktionsanlage die Daten für die Herstellung der Kleinformate aus den plattenförmigen Großformatplatten übermittelt, nach Anspruch 3, **dadurch gekennzeichnet, dass** für den Ausgleich der durch unterschiedliche Auflagen (17, 18) entstehenden Höhenunterschiede innerhalb eines Stapeln (27) Figur 1 die Robotergreifer (25) mit Vorrichtungen für das Trennen einzelner oder mehrerer Fixmaße 20 innerhalb eines Fixmaßblockes (21) je nach Bedarf des Stapelhöhenausgleiches ausgerüstet sind, wobei Bestellzahlen bedingter Stapelhöhenausgleich in Abhängigkeit der jeweils bestellten Fixmaße (20) Figur 3 mit Füllstücken (5) Figur 1, hergestellt von separaten Vorrichtungen innerhalb der Umreifungs-Verpackung Figur 6, erfolgt, bevor die Fixmaßstapel (27) für ihren Transport zu den Bestellern mit Kanthölzern (2), Schonplatten (1), Packzetteln (3) Figur 1 ausgerüstet und umreift werden.

6. Vorrichtungen verbunden mit Softwareverfahren für die Herstellung von Kleinformaten aus plattenförmigen Großformatplatten aus Holz, Stahl, Kunststoff, Glas und anderen flächigen Werkstoffen wie Stoffen, Papieren, Pappen o. dgl., mit einer Produktionsanlage mittels von einem Optimierungsrechner hergestellter Schnittpläne, aus einer oder mehreren Kleinformatbestellungen beliebiger Anzahl verschiedener Kleinformate in jeweils beliebiger Stückzahl, die zu einem Optimierungsauftrag zusammengesetzt sind, die erforderlichen Schnittpläne errechnet, dokumentiert und der Produktionsanlage die Daten für die Herstellung der Kleinformate aus den plattenförmigen Großformatplatten übermittelt, nach Anspruch 3, **dadurch gekennzeichnet, dass** die Software (001) zusätzlich zur Herstellung der Schnittpläne (45) und anderen Aufgaben dafür eingerichtet ist, für die Projektierung von Produktionsanlagen Figur 6 für Fixmaße (20) produktionsparallel mit der Software einer bestehenden Einrichtung für die Herstellung von Fixmaßen (20) Figur 3 einzusetzen ist, wobei die Ergebnisse beider Software verglichen und in den Kostenspalten (56) und im Kostensenkungsblock (58) als Grundlage für kommerzielle Investitionsentscheidungen, und in den Planungsspalten (57) der Vergleichstabelle Figur 5 als technische Grundlage für Entscheidungen maschineller Ausführung einer neuen Produktionsanlage für Fixmaße (20) Figur 3 vorgesehen sind.
